Europäisches Patentamt

European Patent Office

Office européen des brevets

(11) Publication number: **0 220 944**
**B1**

(12) **EUROPEAN PATENT SPECIFICATION**

(45) Date of publication of patent specification: **12.09.90**

(51) Int. Cl.⁵: **F 24 F 7/007, F 04 D 27/02**

(21) Application number: **86308252.5**

(22) Date of filing: **23.10.86**

(54) **A fan with positive and reverse cyclic air flow stirring functions.**

(30) Priority: **23.10.85 GB 8526128**

(43) Date of publication of application:
**06.05.87 Bulletin 87/19**

(45) Publication of the grant of the patent:
**12.09.90 Bulletin 90/37**

(84) Designated Contracting States:
**AT BE CH DE ES FR GB GR IT LI LU NL SE**

(56) References cited:
**CH-A- 397 191
CH-A- 486 673
DE-C- 883 797
DE-C- 894 428
NL-A-8 104 913
US-A-2 163 692
US-A-2 779 264**

(73) Proprietor: **Yang, Tai-Her
5-1 Taipin Street
Si-Hu Town Dzan-Hwa (TW)**

(72) Inventor: **Yang, Tai-Her
5-1 Taipin Street
Si-Hu Town Dzan-Hwa (TW)**

(74) Representative: **Arthur, Bryan Edward et al
Withers & Rogers 4 Dyer's Buildings Holborn
London EC1N 2JT (GB)**

Courier Press, Leamington Spa, England.

EP 0 220 944 B1

# Description

## Background of the invention

This refers to a design in which a cyclic positive and reverse switch is used to operate and control a ceiling fan or air ventilation fan, etc. for cyclic forward and reverse rotation to achieve the object of more complete and even stirring of the air in an air conditioned room.

## Summary of the invention

Manually reversible ceiling fans used in the rooms often blow cooled air downwards during summer to stir and deliver a cooler air flow at a lower place to various corners in a room, and blow upwards during winter to disperse the air flow with a higher temperature at a higher place evenly in the room, thereby keeping the room temperature even and constant and saving energy, but due to the configuration of the room, often there are dead corners that the air flow cannot reach. In this invention a cyclic positive and reverse switch is used to operate and control a ceiling fan for cyclic positive and reverse revolutions to further achieve the object of more complete and even stirring of the air in an air conditioned room.

US patent 2 163 692 describes an air-conditioning system in which louvres and fans set into the wall of an enclosure are controlled in accordance with the direction of the outside wind.

## Brief description of the drawings

Fig. 1 is a block diagram of an example of a fan having a positive and reverse air flow-stirring function.

Fig. 1-1 is a circuit diagram of the example shown in Fig. 1 for providing forward reverse and intermittent drive.

Fig. 2-1 is a diagram of the circuit for providing cyclic positive and reverse rotation.

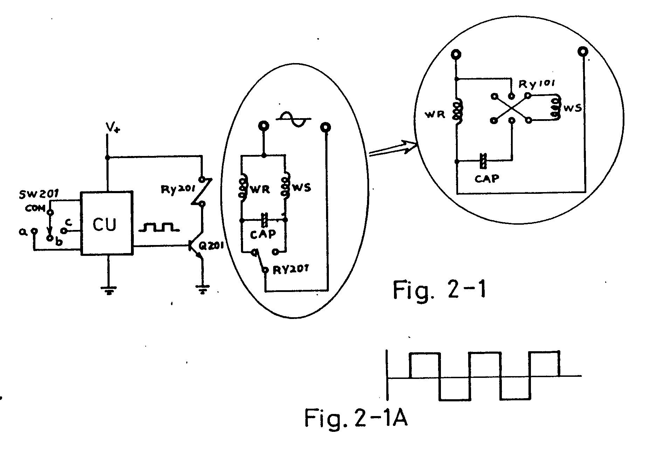

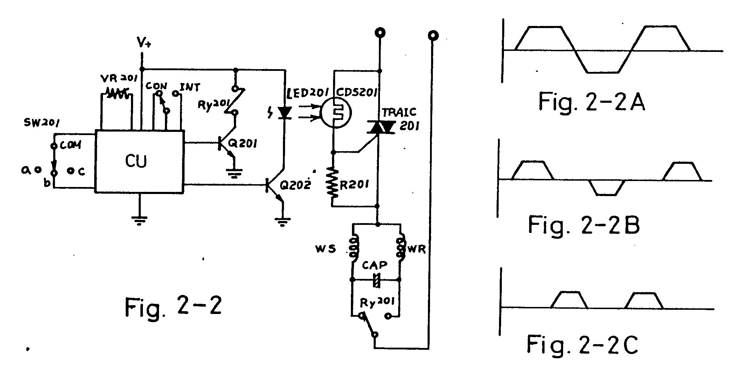

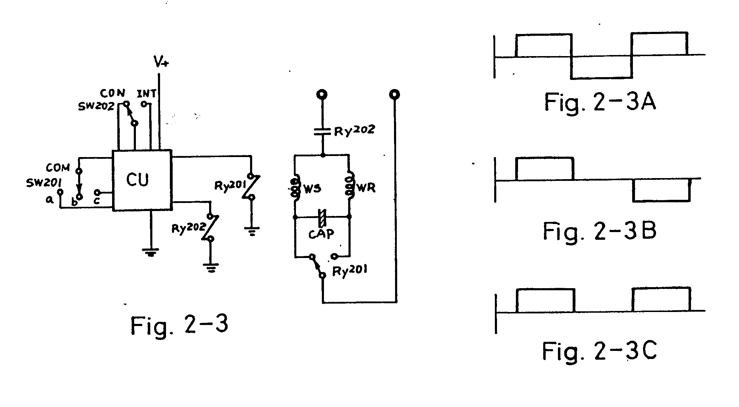

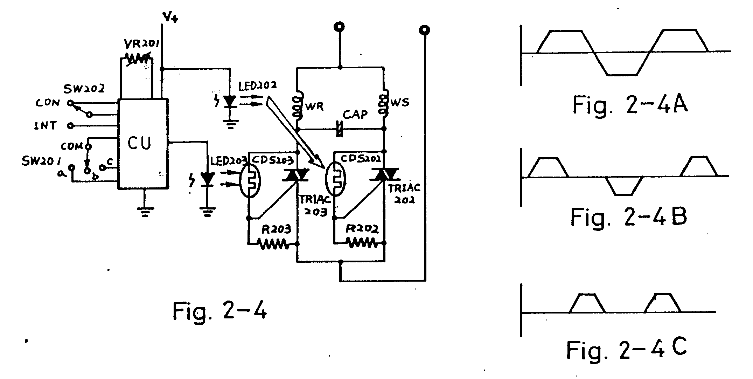

Fig. 2-1 A is diagram of the actions shown in Fig. 2-1.

Figs. 2-2 is a diagram of an example of the circuit of the gradual and change-over positive and reverse revolutions.

Fig. 2-2 A is a diagram of the continuous gradual positive and reverse revolutions shown in Fig. 2-2.

Fig. 2-2 B is a diagram of the intermittent positive and reverse revolutions shown in Fig. 2-2.

Fig. 2-2 C is a diagram of the uni-directional intermittent operation shown in Fig. 2-2.

Fig. 2-3 is a diagram of the circuit using a switch operating and controlling input device to operate and control the direction charge-over relay.

Fig. 2-3 A is a diagram of the continuous positive and reverse actions shown in Fig. 2-3.

Fig. 2-3 B is a diagram of the continuous positive and reverse operations shown in Fig. 2-3.

Fig. 2-3 C is a diagram of the uni-directional operations shown in Fig. 2-3.

Fig. 2-4 is a diagram of a circuit using two sets of TRIAC's for the direction change-over control.

Fig. 2-4 A is a diagram of the cyclic positive and reverse revolutions in Fig. 2-4.

Fig. 2-4 B is a diagram of the continuous or intermittent operation shown in Fig. 2-4.

Fig. 2-4 C is a diagram of the uni-directional operations shown in Fig. 2-4.

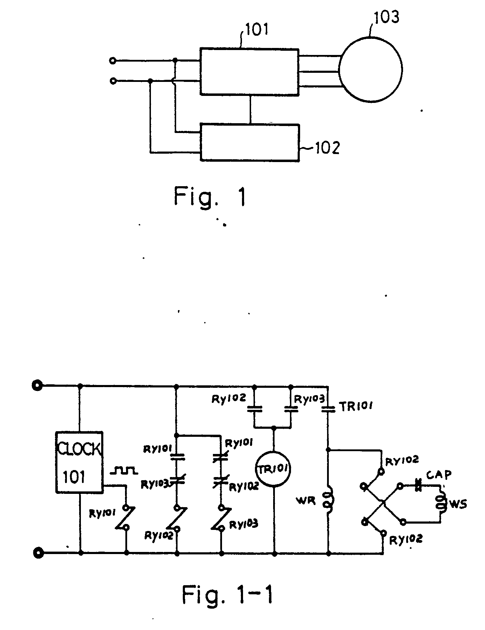

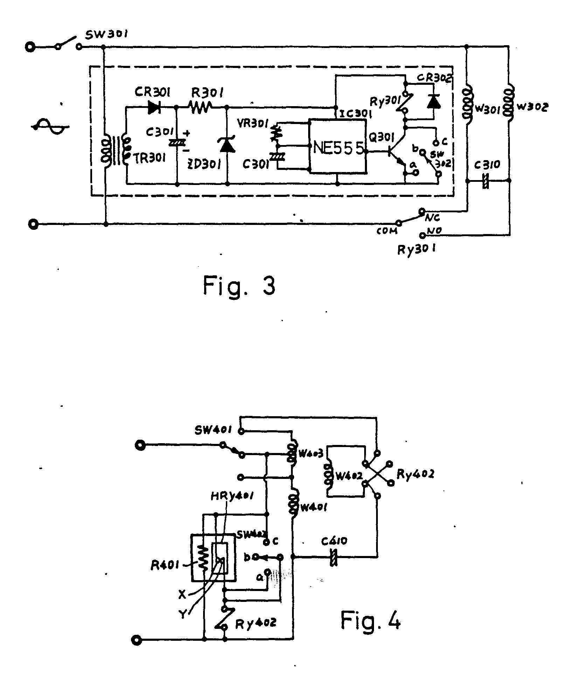

Fig. 3 is a diagram of the example of the circuit for cyclic revolutions shown in Fig. 1.

Fig. 4 is a diagram of the circuit using the cyclic positive and reverse revolutions of the thermo-driven cycle.

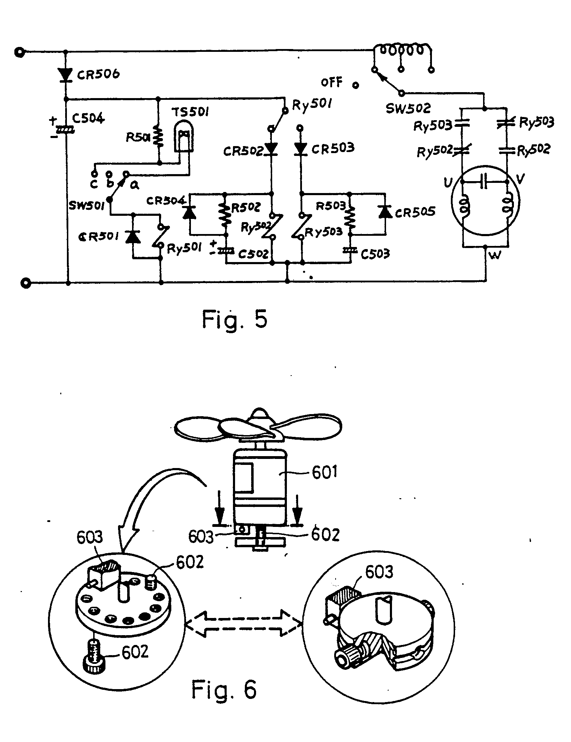

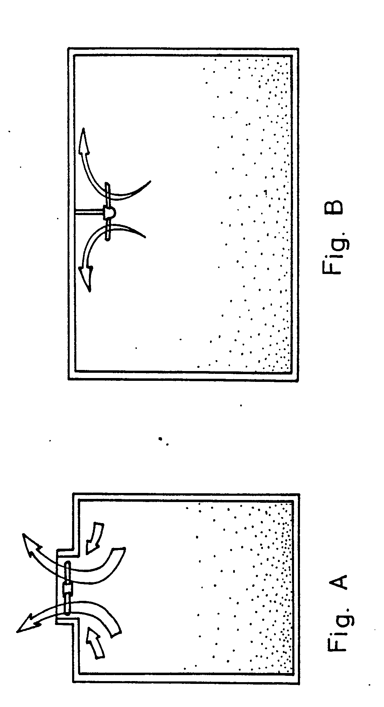

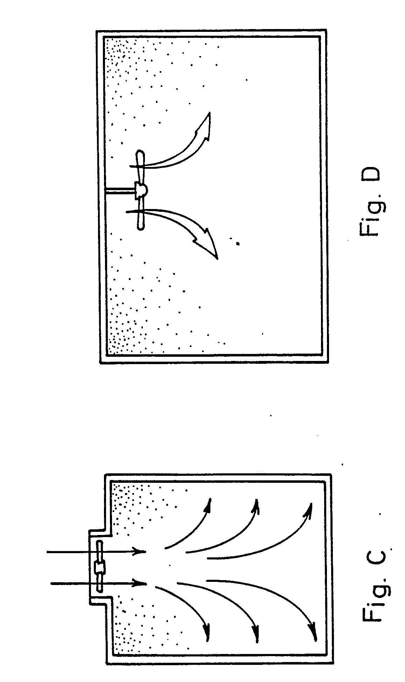

Fig. 5 is a diagram of the circuit using the thermo-driven cycle having the intermittent positive and reverse cycling.

Fig. 6 is a diagram of the mechanical operating and controlling circuit using a double state switch.

The reference Figs. A & B are the indoor air state distribution sketches shown having only air exhaust functions.

The reference Figs. C and D are the indoor air state distribution sketches showing having only the air suction functions.

## Detailed description of the invention

As already known to all, cold air current sinks and hot air rises, and there is a temperature difference between a place further from an air conditioning equipment source (such as an air cooler or heater) and another place closer to the same air conditioning equipment source. To improve this defect, in recent years people often use a ceiling fan to stir the air in an air conditioned room, thus achieving the object of an even air conditioned room temperature distribution. During summer a ceiling fan blowing downward is used to stir the cool air, and during winter, a ceiling fan blowing upward is used to blow the heated air up, thereby achieving the object of an even temperature distribution in a room, but due to the sharp differences in the construction spaces, it is still impossible to make the air flow evenly in various corners, and a similar situation exists in regard to air suction/exhaust fans; please refer to Figs. A, B, C and D.

In the present invention, which is defined in the appended claims, a fan is provided with a cyclic positive and reverse control, thereby achieving the even air stirring.

Since most motors of the fans are of the single phase type, now several examples of the single-phase motors will be mainly cited. There are many circuit elements and circuits for cyclic positive and reverse switching of the fan motors, including a great variety of analogic or digital elements such as the generator or electronic elements or microprocessors with timing software or, further, a mechanical reduction device is used to move a double stable state switch to cause the cyclic reversal of rotation, so the means available for carrying out the invention are too numerous to mention here.

Since the object of the invention is a means that the cyclic positive and reverse switch is used to change-over the fan for the cyclic positive and

reverse revolutions, in the following examples, only a few of them are cited to prove the invention feasible, and similarly with regard to the generator or electronic or mechanical or computer software timing devices.

Fig. 1 is a block diagram of the invention. In the drawing 101 is the positive and reverse switch element constituted by a solid state semi-conductor element or a relay operating and controlling the cyclic circuit, thereby making the fan motor 103 carry out cyclic positive and reverse revolutions. 102 is a cyclic circuit by an analogic or digital generator or electronic circuit or microprocessors to generate the cyclic operational signals for operating and controlling the switch elements 101; its cyclic signals include the sequence changes that often a positive revolution direction persists a set time, then a reverse revolution instruction persists a period of time, and then a positive revolution instruction is generated, or a time interval of the current interruption exists between two oppos2tive instructions; 103 is constituted by the single phase motor including AC or DC motor for the positive and reverse drive.

In other words, the invention can be composed of a cyclic positive or reverse air flow-stirring fan having a positive and reverse revolutionary fan, and the positive and reverse revolutions can change the blade sets that fan and move in the same direction, a suspension device and a control device, in addition to that the selection switch is used to select the continued positive or reverse revolution, its main features is to set the continued cyclic positive and reversed revolutions; the features of its various drive cycles are described as follows:

1) The above-said operating cycles include the directly continued positive and reverse revolutions to change the air flow directions in sequence.

2) The above-said operating cycles include a gradual start and gradual stop to reduce the motor load.

3) The above-said operating cycles include a machine stop time interval between the positive and reverse revolutions to allow the air flows to rise naturally and also to reduce the motor load.

As in the example shown in Fig. 1-1, the time sequence clock 101 generates the drive cyclic instruction, thereby making the relay RY 101 control the cyclic on and off actions. The coil of the direction change-over relay RY 102 is connected in series with the NO contacts of the relay RY 101 and the NC contacts of the relay RY 103 across the power supply. The coil of the relay RY 103 and the NC contacts of RY 102 and RY 101 are also connected across the power supply. The normally open contacts of the timer TR 101 series with the motor will close after the timer TR 101 has received the electric power for some time; its start coil is connected through the double throw contacts of RY 102 for reversed direction.

There is a momentary interval between the release of change over relay RY 102 and closing of relay RY 103 during which current to the timer TR 101 is interrupted, and the timer re-sets. Current to the motor is then restored after a period determined by the setting of the timer, and when it is restored the motor rotation is reversed because RY 102 has changed over. The drive motor thus has a stop time interval after each direction changeover.

4) The above-said operating cycle includes that its operations have the programmable speed changes and both of the positive and reverse cycles to meet various requirements.

The following Figs. 2-1 and 2-4 are the examples of various mutually compatible brief and important measures and functions constituting the invention.

Figs. 2-1 shows a control unit generating a cyclic continuous signal driving a direction changeover relay RY 201 to change the motor direction. This is the simplest form to drive the motor alternately in the forward and reverse directions continuously shown in Fig. 2-1 A. The switch SW 201 allows the selection of continuous forward or reverse rotation.

Fig. 2-2 shows a control unit which operates and controls a direction changeover relay RY 101 and the TRIAC 201 connected in series with the motor power supply. It uses a LED 201 and a CDS 201 coupled with the LED 201 to conduct the switch operating actions, thereby generating the repeated gradual changeover as shown in Fig. 2-2 A, or intermittent positive and reverse rotation, as shown in Fig. 2-2 B, or the positive or reverse electric power-saving uni-direction intermittent operation, as shown in Fig. 2-2 C, and also allows conventional continuous positive revolution or continuous reverse revolution. Further, the variable resistor VR 201 allows control over the TRAC 201 to make the fan motor change its speed, but as circuits of this kind are often seen, no repetition of them is needed here.

As shown in Fig. 2-3, the operation of the switch SW 201 provides an input into the control device to operate and control the direction changeover relay 201 and the relay RY 202 in series with the motor to generate continuous alternate positive and reverse revolutions as shown in Fig. 2-3 A, and the operations of the continuous or intermittent operational selection switch SW 202 controls intermittent positive and reverse operation, as shown in Fig. 2-3 B, and single-direction electric-power-saving intermittent drive as shown in Fig. 2-3 C. It also maintains the original functions of continuous positive rotation or continuous reverse rotation. In the drawing, when the SW 201 is set to the point a, as the motor carries out continuous positive rotation, when the SW 201 is set to the point b, the motor carries out continuous reverse rotation, and when the SW 201 is set to the point C, the motor carries out continuous reverse rotation. SW 202 is an intermittent continuous functional selection switch to select the continuous or intermittent operation.

In the circuit of Fig. 2—4, the control device operates two sets of TRIAC's 202 and 203, which

conduct the direction selection and switching and phase control; the setting of switch SW 201 makes the control unit trigger the TRIAC 202 and the TRIAC 203 to carry out the switching functions, thereby making the motor carry out forward or reverse rotation, or cyclic positive and reverse rotation, as shown in Fig. 2-4 A, and as shown in Fig. 2-4 B the switch SW 202 allows the selection of continuous or intermittent operation or, as shown in Fig. 2-4 C, makes the motor carry out a single-direction intermittent electric power-saving drive. The variable resistor VR 201 is for the operation of the phase-control speed changes.

Fig. 3 is another example of the block diagram shown in Fig. 1. In Fig. 3, SW 301 is a master switch. The common connection end of the two windings W301 and W302 of the single-phase symmetric winding-type capacitance motor is connected to the switch SW 301, and the other end of the windings W 301 and W 302 are connected in parallel to the two ends of the capacitor C 310 and then respectively to the NC and NO contacts of relay RY 301.

When the common contact point of the selection switch SW 302 is set to b the relay RY 301 will not receive electric current so the motor is driven in the positive direction.

When the common contact point of the selection switch SW 302 is set to C, the relay RY 301 receives electric current and operates, so the motor is driven in the other direction.

In the drawing, the voltage step-down resistor R 301 can accept the voltage changes of the transformer TR 301 due to regulation of the speed without affecting the specific DC voltage input.

Fig. 4 is an example of the block diagram as shown in Fig. 1. In Fig. 4, the thermal cyclic relay HRY 401 controls the positive and reverse rotational cycles of the fan motor. The motor shown in Fig. 4 has a running coil W 401 and a speed variation coil W 403 wound coaxially with the coil W 401; the speed variation coil W 403 is provided with tappings connected to the distribution contact points of various groups of the speed control switch SW 301. One of its tappings is connected to one of the common contact points of the relay RY 402. This relay is a double pole double throw relay, and its common contact point is connected to one end of the start capacitor C410; after the two sets of contact points of the RY 402 are cross-connected to form a reversing switch for the start coil W 402; the other end of the start capacitor C 140 is connected to the other end of the running winding W 401 and then to one end of the power supply; one contact X of the thermal relay HRY 401 is connected in series with its own thermal resistor; one end of the heating resistor of the thermal relay HRY 401 is connected to the distribution contact point of the speed switch SW 401 and the other end to the power supply. The selection switch 402 has three distribution contact points a, b and c, of which contact a is connected to the contact point pin Y of the thermal switch HRY 401, and contact b is not connected, and contact C is connected to the contact X of the thermal switch HRY 401. The common contact of switch 402 is connected to the coil of the relay RY 402 to enable this circuit to carry out the following operations:

1. When the selection switch is set to a. of the SW 402, the fan cycles automatically in the forward and reverse directions. When the SW 1 is at ON, since the HRY 401 has not reached operating temperature, its normally-closed contacts X and Y energise the coil of the RY 402, the contacts of which cause the motor to run in one direction. When the heating resistor of the HRY 401 continuously heats sufficiently to open the contacts X and Y, the relay RY 402 is open-circuited which reverses the directon of rotation of the motor. When the HRY 402 dissipates its heat, its contact points close and the motor again reverses. This cycle is repeated indefinitely.

2. When the selection switch SW 402 is set to b. the relay RY 402 is permanently disconnected, thus making the motor constantly run in the reverse direction.

3. When the selection switch SW 402 is set to c, the relay RY 402 is continuously energised and the motor runs continuously in the forward direction.

Fig. 5 is another example of the block diagram shown in Fig. 1 and its main components are as follows:

a single phase motor having a running winding and a start winding and a split phase capacitor, of which the point W is a common point, the point U is a positive rotation input point, the NC contact point of serial relay RY 503 and the ND contact point of relay RH 502 are then connected to the speed change switch, the point V is the input point for reverse rotation, the NC contact point the serial relay RY 502 and tme NO contact point of the RY 503 are then connected to the speed change switch SW 502;

a diode CR 506 and the capacitor C 504 are connected in series across the supply;

the two ends of a thermal switch TS 501 are respectively connected to the points a and b of the swtich SW 501, and a resistor R 501 is connected to the positive terminal of the power supply and the point c of the switch SW 501;

the common point of the distribution switch SW 501 is connected to the coil of the RY 501 and then to the negative terminal of the power supply, and a diode CR 501 is connected across the coil of the relay RY 501;

the common contact point of the RY 501 is connected to the positive supply terminal, its NC contact is connected through a diode CR 502 and the coil of the relay RY 502 to the negative terminal;

a resistor R 502 and a capacitor C 502 form a charging delay circuit which is connected across the coil of the relay RY 502.

the NO contact point of the relay RY 501 is connected through a diode CR 503 and the coil of the relay RY 503 to the negative terminal;

a resistor R 503 and a capacitor C 503 form a charge delay circuit which is connected across the coil of the relay RY 503.

The operation of this circuit will now be described.

1. When the switch SW 501 is set to a, and before the temperature switch TS 501 is heated by the R 501 to its switching temperature, the RY 501 receives current and power is supplied through the NO contact point of the RY 501 and CR 503 to energise the coil of the RY 503 and close its NO contact, causing the motor to run in a reverse sense. Meanwhile the capacitor C 503 charges through the resistor R 503. When the temperature switch TS 501 reaches its switching temperature it opens, cutting off the current through the coil of the relay RY 501, whose NC contact point completes the circuit through the CR 502 and the coil of the RY 502. The capacitor C 502 charges through the resistor R 502. The relay RY 502 switches, its NC contacts cutting off the current through the motor. However, the capacitor C 503 discharges through CR 505 and the coil of RY 503 for a period of time, cutting off the supply to the motor until the capacitor C 503 discharges and RY 503 is released.

After the TS 501 has cooled and is restored to its original condition, the relay RY 501 is energised and its NO contact point completes the circuit through the CR 503 and the coil of the relay RY 503. The capacitor C 503 charges through the resistor R 503. Although the supply to the RY 502 is cut off, the capacitor C 502 still supplies current to the relay coil via the CR 504 for a period of time, cutting off the supply to the motor until the capacitor C 502 discharges and the RY 502 is released. This cycle repeats, thereby causing forward and reverse rotation of the motor with an electric stop interval therebetween.

2. When the switch SW 501 is changed to the point b, the RY 501 receives no electric current. The terminal U of the motor constantly accepts the electric current, and the motor is in continuous positive rotation.

3. When the switch SW 501 is changed to the point c, the RY 501 receives continuous electric current, and the point V of the motor is supplied with electric current, and the motor is in continuous reverse rotation.

The circuit of Figure 1 can also use as the control device a programmed microprocessor and its main components include:

a microprocessor having an input to accept the start, stop, etc. instructions, and also an output to control the motor switching elements. The switch elements and the interface circuits used to accept the operation and control of the microprocessor, may be as shown in Figs. 2-1 and 2-4.

The above-mentioned practical applications of the invention can also be implemented by the type of switch shown in Fig. 6. Its structure comprises:

a reduction gear driven by the motor 601 to rotate a disc with plural sets of the annularly arrayed screw holes; or rotary disc having a drum-shaped part with an annular T-shaped slot therein in which a slidably adjustable stop may be set.

Each of the stops 602 is fixed by a clamping screw into the slot of the disc, which is driven by the low speed shaft of the reduction gear to contact a two-position switch 603 at the end of each positive and reverse rotation so as to change the direction of rotation of the motor.

The drive motor 601 has positive and reverse windings connected to the switch 603.

In operation, the drive motor 601 drives the disc through the reduction gear coupled to its motor shaft, which may be of fixed speed ratio or adjustable speed ratio, until one of the stops 602 operates the two-position switch. The motor then changes direction, which, in turn, changes the direction of the air flow. The process then repeats. The space between the touch stops can be fixed or adjustable to change the cycle accordingly.

**Claims**

1. A room ventilation system comprising an electrically-operated fan (103) and control means (101, 102) controlling the direction of rotation of the fan (103) according to a continuously repeating cycle of forward and reverse rotation.

2. A room ventilation system according to claim 1, in which the control means is arranged to provide a stop time interval between forward and reverse rotation of the fan in each cycle.'

3. A room ventilation system according to any preceding claim, in which the control means provides gradual starting and stopping of the fan.

4. A room ventilation system according to any preceding claim, in which the control means includes a programmable microprocessor.

5. A room ventilation system according to claim 1, in which the control means includes a disc coupled for rotaton to the fan and carrying a projecting finger (602) arranged to engage and operate a changeover switch (603).

**Patentansprüche**

1. Raumlüftungssystem mit einem elektrisch betriebenen Lüfter (103) und mit einer Steuereinrichtung (101, 102), mit der die Drehrichtung des Lüfters (1) in einem sich ständig wiederholenden Zyklus einer Vorwärts- und Rückwärtsrotation steuerbar ist.

2. Raumlüftungssystem nach Anspruch 1, bei dem die Steuereinrichtung so ausgelegt ist, daß in jedem Zyklus zwischen der Vorwärts- und Rückwärtsrotation des Lüfters eine Stillstandszeit vorgesehen ist.

3. Raumlüftungssystem nach einem der vorhergehenden Ansprüche, bei dem die Steuereinrichtung ein stufenartiges Anlaufen und Abstoppen des Lüfters bewirkt.

4. Raumlüftungssystem nach einem der vorhergehenden Ansprüche, bei dem die Steuereinrichtung mit einem programmierbaren Mikroprozessor versehen ist.

5. Raumlüftungssystem nach Anspruch 1, bei dem die Steuereinrichtung eine Scheibe aufweist, die zur Rotation mit dem Lüfter gekuppelt ist und einen abstehenden Finger (602) trägt, der so angeordnet ist, daß er eine Umschalteinrichtung (603) berührt und betätigt.

**Revendications**

1. Système de ventilation d'une pièce comprenant un ventilateur (103) mû électriquement et des moyens de commande (101, 102) commandant le sens de rotation du ventilateur selon un cycle de rotation avant et arrière se répétant continuellement.

2. Système de ventilation d'une pièce selon la Revendication 1, dans lequel les moyens de commande sont prévus pour offrir un temps d'arrêt enre une rotation avant et une rotation arrière du ventilateur à chaque cycle.

3. Système de ventilation d'une pièce selon l'une quelconque des Revendications précédentes, dans lequel les moyens de commande permettent une mise en marche et un arrêt graduels du ventilateur.

4. Système de ventilation selon l'une quelconque des Revendications précédentes, dans lequel les moyens de commande comprennent un micro-processeur programmable.

5. Système de ventilation d'une pièce selon la Revendication 1, dans lequel les moyens de commande comprennent un disque associé à la rotation du ventilateur et portant un ergot (602) faisant saillie positionné pour enclencher et faire fonctionner un commutateur-inverseur (603).

Fig. 1

Fig. 1-1

1

Fig. 2-1

Fig. 2-1A

Fig. 2-2

Fig. 2-2A

Fig. 2-2B

Fig. 2-2C

Fig. 2-3A

Fig. 2-3B

Fig. 2-3C

Fig. 2-3

Fig. 2—4A

Fig. 2—4B

Fig. 2—4C

Fig. 2—4

Fig. 3

Fig. 4

Fig. 5

Fig. 6

Fig. A

Fig. B

EP 0 220 944 B1

Fig. D

Fig. C